# FASCICULE DE BREVET EUROPEEN

(11) **EP 0 566 136 B1**
(45) Date de publication et mention de la délivrance du brevet: **09.10.1996**
(21) Numéro de dépôt: 93106199.8
(22) Date de dépôt: 16.04.1993
(51) Int. Cl.: B60M 1/28

(54) **Machine à laver les trains**
Schienenfahrzeugwaschmaschine
Train washing machine

(30) Priorité: 16.04.1992 FR 9204960
(43) Date de publication de la demande: 20.10.1993
(73) Titulaire: S.C.L.E. S.A., F-31075 Toulouse Cédex (FR); SOCIETE DES ETS ROGER BRILLIE S.A., F-93151 Le Blanc Mesnil Cédex (FR)
(72) Inventeur: Prat, Jean-Paul, F-31320 Castanet Tolosan (FR); Paturel, Christian, F-77400 Thorigny (FR)
(74) Mandataire: Schlawick, Yvan

(56) Documents cités:
- EP-A- 0 474 547
- FR-A- 920 676
- US-A- 2 242 692
- Database WPIL Section EI, Week 8517, Derwent Publications Ltd., London, GB; AN 85-104287 & SU-A-1 119 888(LENGD METRO) 23 Octobre 1984

## Description

La présente invention a trait à une machine à laver les trains selon le préambule, de la Revendication 1, apte à être placée sur des voies équipées de lignes aériennes de traction électrique.

D'une manière générale, ces lignes aériennes de traction électrique comprennent un ou plusieurs fils de contact conducteurs qui, suspendus à une structure-support par l'intermédiaire d'isolateurs, doivent rester constamment en contact avec le dispositif de prise de courant de la locomotive électrique équipée à cet effet d'un pantographe. Le rendement du captage d'énergie électrique par la locomotive évoluant le long de la voie ferrée est essentiellement dépendant de la régularité du plan de contact entre le haut des fils conducteurs et le pantographe.

Pour une meilleure lecture du texte qui va suivre, la ligne aérienne de traction électrique sera supposée ne comporter qu'un seul fil de contact.

Ce fil de contact, plus couramment appelé "caténaire", est une cause de gêne préoccupante pour l'installation d'une machine à laver les trains le long d'une voie électrifiée, notamment pour autoriser les mouvements de balancement des brosses horizontales de lavage. Aussi, la première solution envisagée la plus utilisée à ce jour a été la suppression dudit fil de contact encombrant au-dessus de la portion de voie comportant la machine à laver. Cependant, l'absence de ce fil de contact entraîne une rupture de charge électrique puisque les trains doivent alors être poussés ou tirés par un locotracteur ou un câble sur cabestan, pour être acheminés à l'intérieur de l'enceinte de lavage de la machine. En outre, la suppression de ce fil de contact provoque aussi une rupture mécanique du fil de contact, pour le guidage du pantographe de la locomotive électrique, pantographe qui risque alors de se déployer dangereusement sous l'effet de son mouvement ascensionnel livré à lui-même.

Partant de ces constatations, les demanderesses ont donc imaginé d'équiper la machine à laver les trains installée le long d'une voie ferrée, d'un rail conducteur escamotable permettant d'interrompre ou de rétablir la continuité électrique et mécanique du fil de contact de la ligne aérienne de traction électrique disposée de part et d'autre de ladite machine. Suivant l'invention, ledit rail conducteur est monté pivotant autour d'un point disposé dans l'axe du susdit fil de contact, entre une position de travail où ledit rail est diposé dans l'axe du fil de contact pour assurer la continuité électrique et mécanique de ce dernier à travers la machine à laver et, une position de repos, ou ledit rail est diposé perpendiculairement audit fil de contact, de manière à dégager au moins une brèche verticale dans la continuité mécanique du fil de contact à l'intérieur de la machine à laver afin d'autoriser une expansion angulaire des brosses horizontales de lavage de part et d'autre du plan horizontal délimité par le fil de contact.

De la sorte, lorsque le rail conducteur est en position de travail c'est-à-dire disposé dans l'axe du fil de contact où il assure la continuité électrique et mécanique dudit fil de part et d'autre de la machine à laver, la locomotive électrique peut alors être acheminée le long de la voie ferrée à l'intérieur de ladite machine à laver, sans rupture électrique pour le captage d'énergie nécessaire à sa traction et sans rupture mécanique pour le guidage de son pantographe.

Une fois, le nez de ladite locomotive positionné à l'intérieur de la machine, le rail est pivoté vers une position de repos où il est positionné perpendiculairement au fil de contact de manière à établir une coupure électrique du circuit dans la machine à laver et à dégager une brèche verticale autorisant les mouvements angulaires des brosses horizontales de lavage de part et d'autre du plan horizontal délimité par le fil de contact.

Lorsque l'opération de lavage est terminée, le susdit rail conducteur est alors pivoté à nouveau vers sa position de travail dans l'axe du fil de contact, de manière à rétablir la continuité électrique et mécanique de ce dernier pour assurer l'acheminement de la locomotive électrique hors de la machine à laver.

L'invention concerne une machine à laver équipée d'un dispositif mettant en oeuvre un tel procédé d'escamotage par pivotement d'un rail conducteur. Suivant l'invention, le susdit dispositif est constitué par un rail conducteur qui, disposé dans la machine à laver, est soutenu par l'intermédiaire d'un mécanisme de pivotement à la structure-support du fil de contact de la ligne aérienne de traction électrique de part et d'autre de la machine à laver.

L'invention venant d'être évoquée ci-dessus dans sa forme la plus élémentaire, d'autres caractéristiques et d'autres avantages en ressortiront plus clairement à la lecture de la description qui suit et aux dessins l'accompagnant, donnant à titre d'exemple non limitatif, un mode de réalisation d'une machine à laver les trains respectant les concepts fondamentaux de l'invention.

Sur ces dessins :
La figure 1 illustre schématiquement une voie ferrée équipée d'une machine à laver les trains conformément aux dispositions de l'invention.
La figure 2 est une vue de côté illustrant le fonctionnement du dispositif de l'invention.

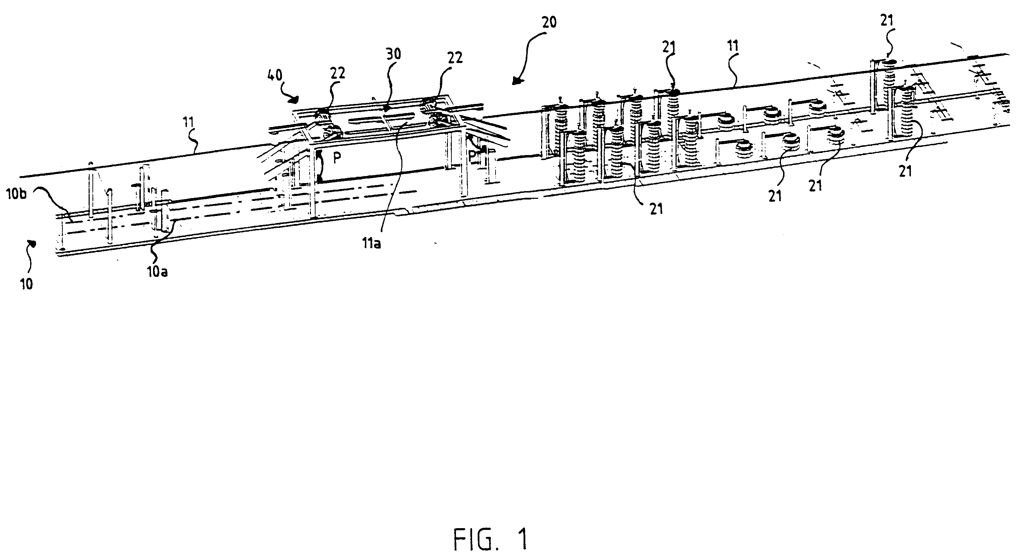

Telle qu'illustrée sur le dessin de la figure 1, la voie ferrée 10 le long de laquelle peut évoluer un véhicule à traction électrique non représenté, comporte classiquement deux rails parallèles 10a et 10b posés sur des traverses solidaires du sol pour constituer le chemin de roulement dudit véhicule. Ces deux rails 10a et 10b sont surmontés d'une ligne aérienne de traction électrique centrale se composant dans le cas présent d'un seul fil de contact 11, éventuellement reliée à une structure-support tel qu'un câble porteur par des fils verticaux dits "pendules" ou par des isolateurs 12. Ce fil de contact ou "caténaire" 11 alimenté en énergie électrique, a pour objet de rester constamment en contact mécanique avec le dispositif de captage d'énergie électrique du véhicule évoluant sur les rails 10a et 10b, constitué à cet effet d'un pantographe animé d'un mouvement ascensionnel permanent pour exercer une pression constante sur ledit fil 11.

Suivant l'invention, une machine à laver les trains, référencée 20 dans son ensemble, est agencée le long de cette voie ferrée 10, entre les rails 10a, 10b et le fil de contact 11. Elle se compose, disposés successivement dans le sens d'avancement du véhicule et le long de la susdite voie 10 :
- d'une série de brosses verticales 21 qui, disposées en amont et espacées deux par deux pour autoriser entre elles le passage dudit train, sont ajustées en hauteur en fonction des parties latérales du véhicule à nettoyer,
- et d'une série de brosses horizontales 22 qui, disposées en aval, sont animées chacune d'un mouvement pendulaire P pour assurer le nettoyage de l'avant et de l'arrière du véhicule.

Comme on peut le voir sur le dessin de la figure 1, le mouvement pendulaire P des brosses horizontales de lavage 22 pose un problème quant à leur expansion angulaire qui est nécessairement développée de part et d'autre du plan horizontal délimité par le fil de contact 11. Aussi, la longueur de fil de contact 11 disposée au-dessus des rails 10a, 10b et des susdites brosses horizontales 22, a été sectionnée pour être remplacée, conformément au concept fondamental de l'invention, par un rail conducteur 11a.

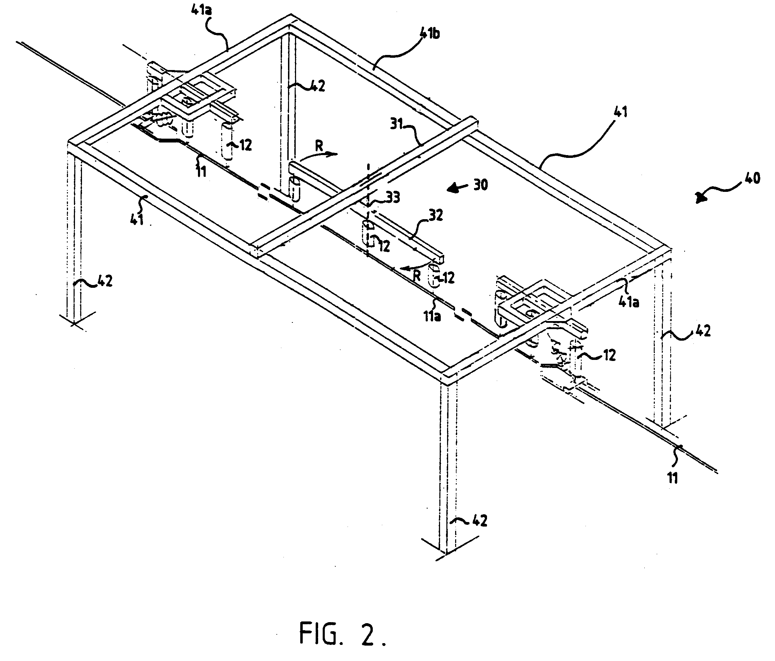

Comme montré plus en détails sur le dessin de la figure 2, ce rail conducteur 11a est animé d'un mouvement R de pivotement sur lui-même au moyen d'un dispositif d'escamotage 30, entre une position de travail telle qu'illustrée sur le dessin de la figure 2 où ledit rail est disposé dans l'axe du fil de contact 11 et une position de repos non illustrée, où ledit rail est disposé perpendiculairement audit fil de contact 11. Ainsi, dans cette dernière position dite de repos, le rail conducteur 11a se trouve disposé parallèlement aux susdites brosses horizontales de lavage 22 de la machine à laver, de manière à dégager une brèche verticale autorisant le mouvement pendulaire P desdites brosses de part et d'autre du plan horizontal délimité par le fil de contact 11.

Afin d'autoriser le pivotement R en son milieu du rail conducteur 11a, le susdit dispositif d'escamotage 30 est supporté par une structure-support 40 se composant d'un assemblage logique de longerons définissant un cadre horizontal 41 supporté à ses quatre angles par quatre poteaux 42. Les deux poutres latérales 41a du cadre 41 maintiennent en suspension, par l'intermédiaire d'isolateurs 12, les extrémités libres du fil de contact 11 aboutissant à l'intérieur de l'enceinte délimitée par l'ensemble de la structure-support 40. Les deux poutres longitudinales 41b servent d'embase-support au dispositif d'escamotage par pivotement 30 du rail conducteur 11a, constitué à cet effet de deux traverses 31 et 32 montées pivotantes en leur milieu (flèche R) l'une par rapport à l'autre par l'intermédiaire d'un mécanisme de pivotement 33, non représenté car facilement mis en oeuvre par un homme de métier. La première traverse 31, montée fixe sur les deux longerons 41b du cadre 41, est positionnée au-dessus des rails 10a et 10b de la voie ferrée 10 parallèlement aux brosses horizontales de lavage 22, alors que la deuxième traverse 32, montée rotative (fléche R) par rapport à la première, maintient en suspension par l'intermédiaire d'isolateurs 12, le susdit rail conducteur 11a.

Il est également possible de prévoir d'autres mouvements de pivotement du susdit rail conducteur 11a à adapter selon la configuration des brosses de lavage 22. Ainsi par exemple, le susdit rail conducteur 11a peut être adapté pour être monté pivotant dans un plan vertical audit fil de contact 11. De même, lorsque ledit rail ne doit s'effacer que devant une seule brosse de lavage, il peut être monté pivotant à l'une de ses extrémités.

Afin de permettre une meilleure compréhension des dessins, une liste des références avec leurs légendes est ci-après énumérée.
- 10: Voie ferrée
- 10a,10b: Rails
- 11: Fil de contact de la ligne aérienne de traction électrique.
- 11a: Rail conducteur
- 12: Isolateurs
- 20: Machine à laver les trains
- 21: Brosses verticales de lavage
- 22: Brosses horizontales de lavage
- 30: Dispositif d'escamotage du rail conducteur 11a
- 31: Première traverse fixe
- 32: Deuxième traverse mobile
- 33: Mécanisme de pivotement
- 40: Structure-support
- 41: Cadre horizontal
- 41a: Poutres latérales
- 41b: Poutres Longitudinales
- 42: Poteaux
- Flèches P: Mouvement pendulaire des brosses horizontales
- Flèches R: Mouvement de pivotement du rail conducteur 11a

## Revendications

1. Machine à laver les trains comportant des brosses horizontales de lavage (22) animées d'un mouvement pendulaire (flèches P), **CARACTERISEE PAR LE FAIT QUE** la structure-support (40) des susdites brosses horizontales de lavage (22) assure le support d'un dispositif d'escamotage (30) destiné à soutenir un rail conducteur (11a) permettant d'interrompre ou de rétablir la continuité électrique et mécanique du fil de contact (11) d'une ligne aérienne de traction électrique traversant longitudinalement ladite machine à laver.

2. Machine à laver selon la revendication 1, **CARACTERISEE PAR LE FAIT QUE** le susdit dit rail conducteur (11a) est monté pivotant en son milieu (flèche R) dans un plan horizontal parallèle audit fil de contact (11) autour d'un point disposé dans l'axe du susdit fil de contact (11), entre une position de travail où ledit rail (11a) est disposé dans l'axe du fil de contact (11) et une position de repos où ledit rail (11a) est disposé perpendiculairement audit fil de contact (11).

3. Machine à laver selon les revendications 1 et 2, **CARACTERISEE PAR LE FAIT QUE** la susdite structure-support (40) du rail-conducteur (11a) se compose d'un cadre horizontal (41) supporté à ses quatre angles par quatre poteaux (42) de telle sorte que les deux poutres latérales (41a) du cadre (41) maintiennent en suspension les extrémités libres du fil de contact (11) aboutissant à l'intérieur de l'enceinte de la machine à laver, et que les deux poutres longitudinales (41b) servent d'embase-support au dispositif d'escamotage par pivotement (30) du rail conducteur (11a).

4. Machine à laver selon les revendications 2 et 3, **CARACTERISEE PAR LE FAIT QUE** le susdit dispositif d'escamotage (30) est constitué par deux traverses (31 et 32) montées pivotantes en leur milieu (flèche R) l'une par rapport à l'autre par l'intermédiaire d'un mécanisme de pivotement (33), de telle sorte que la première traverse (31), montée fixe sur les deux longerons (41b) du cadre (41), soit positionnée au-dessus des rails (10a et 10b) de la voie ferrée (10) parallèlement aux brosses horizontales de lavage (22), et que la deuxième traverse (32), montée rotative (fléche R) par rapport à la première, maintienne en suspension par l'intermédiaire d'isolateurs (12), le susdit rail conducteur (11a).

## Claims

1. A train washing machine comprising horizontal washing brushes (22) moved by a swinging motion (arrows P), characterised in that said supporting structure (40) of said horizontal washing brushes (22) ensures the support of a retracting device (30) intended to support a conductive rail (11a) allowing to cut off or restore electrical and mechanical continuity of a contact wire (11) of overhaed electrical drive lines crossing longitudinally said train washing machine.

2. A train washing machine as claimed in claim 1, characterised in that said conductive rail (11a) is mounted pivotally in its middle (arrow R) in a horizontal plane parallel to said contact wire (11) around a point located in the axis of the said contact wire (11), between a working position in which said rail (11a) is placed in the axis of the contact wire (11) and a resting position in which said rail (11a) is placed perpendicular to said contact wire (11).

3. A train washing machine as claimed in claims 1 and 2, characterised in that said supporting structure (40) of the conductive rail (11a) is made of a horizontal frame (41) supported by four posts (42) at its four angles so that the two lateral beams (41a) of the frame (41) hold suspended the free ends of the contact wire (11) ending inside the enclosure of the washing machine, and in that the two longitudinal beams (41b) are used as supporting shoulders for the pivotal retracting device (30) of the conductive rail (11a).

4. A train washing machine as claimed in claims 2 and 3, characterised in that said retracting device (30) is made of two crossbeams (31 and 32) pivotally mounted in their middle (arrow R) relative to each other through a pivoting mechanism (33), so that the first crossbeam (31), fixedly mounted on the two longitudinal girders (41b) of the frame (41) is positionned above the rails (10a and 10b) of the railway track (10) parallel to the horizontal washing brushes (22), and the second crossbeam (32), rotatively mounted (arrow R) relative to the first one, holds said conductive rail (11a) suspended through insulators (12).

## Patentansprüche

1. Waschvorrichtung für Züge bestehend aus waagrechten, hin- und herpendelden (Pfeil P) Waschbürsten (22) GEKENNZEICHNET DADURCH, DAß die Abstützstruktur (40) der oben genannten waagrechten Waschbürsten (22) eine wegschwenkbare Vorrichtung (30) stützt, die eine Leitschiene (11a) trägt, deren Aufgabe es ist, die elektrische und die mechanische Kontinuität des Kontaktdrahtes (11) einer oberirdischen elektrischen Förderungsleitung zu gewähren, die die genannte Waschvorrichtung längs durchquert.

2. Waschvorrichtung nach dem Anspruch 1 GEKENNZEICHNET DADURCH, DAß die genannte Leitschiene (11a) auf einer waagrechten, zu dem Kontaktdraht (11) parallelen Ebene in ihrer Mitte schwenkbar (Pfeil R) um einen Punkt in der Fluchtlinie des Kontaktdrahtes angebracht ist, und zwar (11) zwischen einer Arbeitsstellung, wo die genannte Schiene (11a) sich in der Fluchtlinie des Kontaktdrahtes (11), und einer Ruhestellung, wo die genannte Schiene (11a), sich senkrecht zu dem Kontaktdraht (11) befindet.

3. Waschvorrichtung nach den Ansprüchen 1 und 2 GEKENNZEICHNET DADURCH, DAß die genannte Stützstruktur (40) der Leitschiene (11a) aus einem an seinen vier Ecken durch vier Pfähle gestützen Rahmen (41) besteht, so daß die zwei Querbalken (41a) des Rahmens (41) eine Aufhängung für die in die Waschvorrichtung führenden freien Extremitäten des Kontaktdrahtes (11) bilden, und daß die zwei Längsbalken (41b) als Stützfläche für die wegschwenkbare Vorrichtung (30) der Leitschiene dienen.

4. Waschvorrichtung nach Ansprüchen 2 und 3 GEKENNZEICHNET DADURCH, DAß die genannte wegschwenkbare Vorrichtung (30) aus zwei durch eine Schwenkvorrichtung (33) in ihrer Mitte zueinander schwenkbaren (Pfeil R) Querleisten (31 und 32) besteht, so daß die erste Querleiste (31), die fest auf den zwei Längsbalken (41b) des Rahmens (41) angebracht ist, sich oberhalb der Bahnschienen (10a und 10b) parallel zu den waagrechten Waschbürsten (22) befindet, und daß die zweite Leiste (32), die schwenkbar (Pfeil R) im Verhältnis zu der ersten Leiste angebracht ist, durch Isolatoren (12) eine Aufhängung für die genannte Leitschiene (11a) bildet.
